# EUROPEAN PATENT SPECIFICATION

(11) **EP 3 324 652 B1**
(45) Date of publication and mention of the grant of the patent: **20.01.2021**
(21) Application number: 16820989.8
(22) Date of filing: 31.05.2016
(51) Int. Cl.: G01H 3/00, G01H 1/00, H04R 3/04

(54) **SOUND PRESSURE MEASUREMENT SYSTEM AND MEASUREMENT METHOD**
SCHALLDRUCKPEGEL MESSSYSTEM UND MESSVERFAHREN
SYSTÈME DE MESURE DU NIVEAU DE PRESSION ACOUSTIQUE ET PROCÉDÉ DE MESURE

(30) Priority: 07.07.2015 JP 2015135780
(43) Date of publication of application: 23.05.2018
(73) Proprietor: Kyocera Corporation, Kyoto-shi, Kyoto 612-8501 (JP)
(72) Inventor: INAGAKI, Tomohiro, Kyoto-shi Kyoto 612-8501 (JP)
(74) Representative: SSM Sandmair
(86) International application number: PCT/JP2016/002627
(87) International publication number: WO 2017/006509

(56) References cited:
- WO-A1-2014/064924
- WO-A1-2014/208085
- WO-A1-2015/059847
- GB-A- 2 456 846
- JP-A- S59 223 098
- JP-A- 2014 020 848
- JP-A- 2015 082 837
- "Electroacoustics - Simulators of human head and ear - Part 7: Head and torso simulator for acoustic measurement of hearing aids", IEC TS 60318-7:2011, IEC, 3, RUE DE VAREMBÉ, PO BOX 131, CH-1211 GENEVA 20, SWITZERLAND, 24 February 2011 (2011-02-24), pages 1-35, XP082001568, [retrieved on 2011-02-24]
- "Electroacoustics - Simulators of human head and ear - Part 7: Head and torso simulator for the measurement of air-conduction hearing aids", IEC TS 60318-7:2017, IEC, 3, RUE DE VAREMBÉ, PO BOX 131, CH-1211 GENEVA 20, SWITZERLAND, 12 April 2017 (2017-04-12), pages 1-33, XP082011487, [retrieved on 2017-04-12]

## Description

### TECHNICAL FIELD

The present disclosure relates to a measurement system and a measurement method for evaluating an electronic device that transmits sound based on vibration of a vibrating body to a user.

### BACKGROUND

Patent literature (PTL) 1 discloses an electronic device, such as a mobile phone, that transmits air-conducted sound and bone-conducted sound to a user. In PTL 1, the air-conducted sound refers to a sound transmitted to the user's auditory nerve when the eardrum vibrates upon vibration of air reaching the eardrum through the external ear canal, the vibration of air being caused by a vibrating object. In PTL 1, the bone-conducted sound refers to sound that is transmitted to the user's auditory nerve through a portion of the user's body, such as the cartilage of the outer ear, which is in contact with a vibrating object.

In the telephone disclosed in PTL 1, a rectangular plate-shaped vibrating body, composed of a piezoelectric bimorph and a flexible substance, is attached to an outer surface of a housing via an elastic member. PTL 1 also discloses that when voltage is applied to the piezoelectric bimorph in the vibrating body, the piezoelectric material expands and contracts in the longitudinal direction, causing the vibrating body to vibrate. Air-conducted sound and bone-conducted sound are then transmitted to the user when the user brings the vibrating body in contact with the auricle.

Document WO 2015/059847 A1 discloses a measurement system for evaluating an acoustic device that comprises a vibration element and uses vibration conveyance to cause sounds to be heard, comprising: an ear-shaped part that includes an ear model imitating a human ear and also includes an artificial temporal bone part connected to the ear model; and a vibration detection element that is placed on the artificial temporal bone part. Document WO2014/064924 A1 discloses a vibration pick-up device, which measures an electronic device with which vibration transmission is used to convey sound to a user by pressing, against a human ear, a vibration body held on a casing, the pick-up device being provided with: a plate-like vibration transmission member which is capable of being attached to a peripheral part of an artificial external auditory canal formed in an ear model part modelled after a human ear, and which is provided with a hole communicating with the artificial external auditory canal; and a vibration pick up connected to a part of the vibration transmission member.

### CITATION LIST

### Patent Literature

PTL 1: JP 2005-348193 A
PTL 2: JP 5486041 B2

### SUMMARY

A measurement system according to an embodiment of the present disclosure includes: an ear-shaped unit comprising an ear model imitating a human ear, an artificial external ear canal unit forming an artificial external ear canal that extends from the ear model, and a weight unit configured to house the artificial external ear canal unit therein without contacting the artificial external ear canal unit; and a sound pressure measuring unit disposed at an end of the artificial external ear canal unit and configured to detect air-conducted sound including sound generated by the artificial external ear canal unit and a base having a recess or a through-hole, characterized in that the weight unit is disposed inside the recess or the through-hole and is held by the base.

### BRIEF DESCRIPTION OF THE DRAWINGS

In the accompanying drawings:
FIG. 1 illustrates the configuration of a measurement system according to a first embodiment of the present disclosure;
FIG. 2 is a plan view illustrating an example of an electronic device targeted for measurement;
FIG. 3 is a detailed diagram of an ear-shaped unit in FIG. 1;
FIG. 4 illustrates the name of each portion of the ear-shaped unit in FIG. 1;
FIG. 5 is a functional block diagram illustrating the configuration of the main portion of the measurement system in FIG. 1;
FIG. 6 illustrates the configuration of a measurement system according to a second embodiment of the present disclosure;
FIG. 7 illustrates measurement results for an example of a measurement system of the present disclosure and a comparative example; and
FIG. 8 is a reference diagram illustrating measurement results for an actual head.

### DETAILED DESCRIPTION

Embodiments of the present disclosure are described below with reference to the drawings.

The inventor has realized that to appropriately evaluate an electronic device, such as the one in PTL 1, that transmits some form of sound by vibration, it would be preferable to measure the amount of sensory sound pressure while approximating the human body insofar as possible. The sensory sound pressure is the combination of sound pressure and an amount of vibration that a human body experiences due to vibration of a vibrating object.

Therefore, the inventor has developed a measurement apparatus that, as disclosed in PTL 2, includes an artificial ear model and an artificial external ear canal, and simultaneously measures vibration and air-conducted sound generated when vibration is presented. Further research with such a measurement apparatus, however, showed that the measurement results vary depending on the pressure and angle at which the vibrating object is pressed against the artificial ear model.

### (First embodiment)

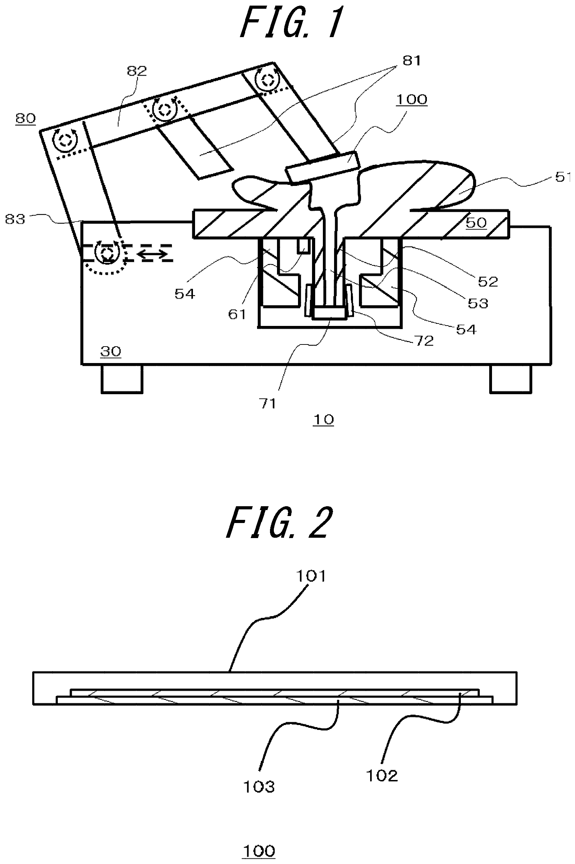

A measurement system 10 according to this embodiment includes a base 30, an ear-shaped unit 50, measurement systems 60, 70, and the like, as illustrated in FIG. 1. In the description below, an acoustic device 100 comprises a rectangular panel 103 on a surface of a housing 101 as an example, as illustrated by the cross-sectional diagram of FIG. 2. The panel 103 is bent by a piezoelectric element 102 and is assumed to vibrate as a vibrating body.

The base 30 includes a foundation made of metal such as stainless steel (SUS). A vibration absorbing member made of a rubber material may be provided at the legs of the base 30. Vibration from the desk on which the base 30 is placed is thus less likely to affect measurement adversely. The base 30 includes a recess or a through-hole for housing the below-described measurement system that includes the ear model.

The ear-shaped unit 50 imitates a human ear. The ear-shaped unit 50 includes an ear model 51 corresponding to a human auricle and an artificial external ear canal unit 52 joined to the ear model 51. The artificial external ear canal unit 52 is large enough to cover the ear model 51. An artificial external ear canal 53 is formed in the central region of the artificial external ear canal unit 52. The ear-shaped unit 50 is supported by the base 30 at the periphery of the artificial external ear canal unit 52.

The ear-shaped unit 50 (ear model 51 and artificial external ear canal unit 52) is made from similar material to the material of an average ear model (KB0060 to KB1091) or the like, such as material conforming to IEC 60318-7. This material is used, for example, in a head and torso simulator (HATS) manikin, a Knowles electronic manikin for acoustic research (KEMAR® (KEMAR is a registered trademark in Japan, other countries, or both) by Knowles Electronics), or the like. This material may, for example, be formed with a material such as rubber having a hardness of 35 to 55. The hardness of rubber may, for example, be measured in conformity with international rubber hardness (IRHD/M method) conforming to JIS K 6253, ISO 48, or the like. A fully automatic IRHD/M method micro-size international rubber hardness gauge GS680 by Teclock Corporation may suitably be used as a hardness measurement system. Considering the variation in ear hardness due to age, generally two or three types of the ear-shaped unit 50 with a different hardness are preferably prepared and used interchangeably.

The length of the artificial external ear canal 53 formed in the artificial external ear canal unit 52 corresponds to the length up to the human eardrum and, for example, is suitably set in a range of 26 mm to 40 mm. In this embodiment, the length of the artificial external ear canal 53 is approximately 30 mm.

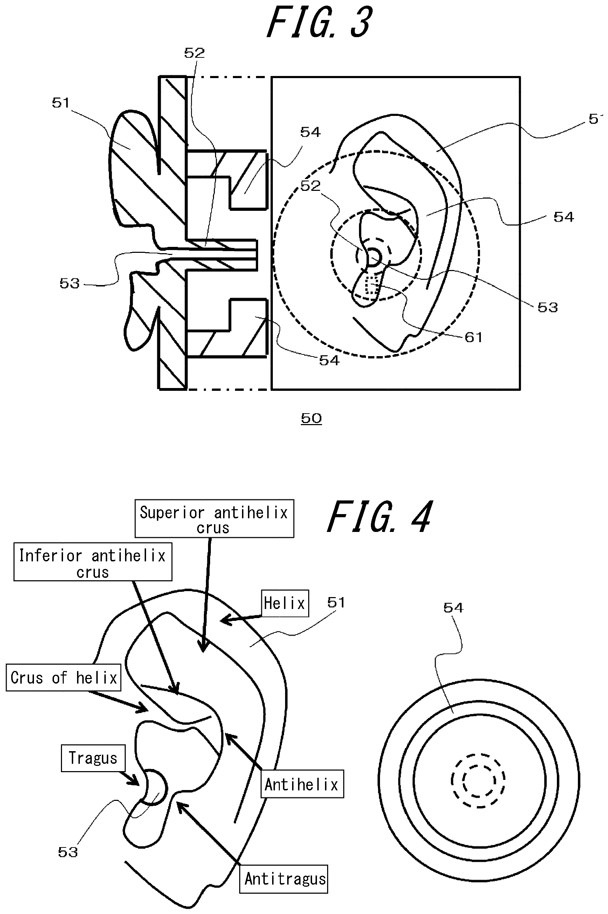

As illustrated in FIGS. 3 and 4, the ear-shaped unit 50 faces the ear model 51 and includes a weight unit 54 disposed around the artificial external ear canal unit 52. The weight unit 54 roughly has the shape of a circular tube as an example. The weight unit 54 extends in the extending direction of the artificial external ear canal 53 without the inner wall of the weight unit 54 contacting the outer peripheral wall of the artificial external ear canal unit 52. As a more specific example, the weight unit 54 is configured so that the outer diameter of the circular tube is nearly uniform, whereas the inner diameter is wide at the side closer to the ear model 51 and narrow at the side farther from the ear model 51. By varying the inner diameter in this way, a space for disposing a vibration detection element 61 of a vibration detector 60, for example, may be formed between the outside of the artificial external ear canal unit 52 and the inside of the weight unit 54. Alternatively, a space sufficient so as not to obstruct vibration of the artificial external ear canal unit 52 may be formed. The weight unit 54 may also be provided with sufficient weight while forming a sufficient inner space. Accordingly, a variety of designs not limited to this embodiment may be adopted.

The surface of the weight unit 54 on the ear model 51 side is in contact with the surface of the ear-shaped unit 50 opposite the ear model 51. As a result, the weight of the ear-shaped unit 50 as a whole increases and measurement accuracy is improved. The surface of the weight unit 54 on the ear model 51 side may be adhered to the surface of the ear-shaped unit 50 opposite the ear model 51 or may simply be in close contact. In other words, it suffices for the two surfaces to be in close contact or adhered to each other in a temporary (for example, detachable) or long-term (for example, non-detachable) manner by intermolecular forces, Van der Waals forces, an anchor effect, or the like. Therefore, a slope may be provided in the recess (or through-hole) of the base 30, for example, with the diameter being wide at the opening and reducing towards the bottom of the recess.

The outer wall portion of the weight unit 54 is held by the inner wall of the recess provided in the base 30. As a result, the weight unit 54, that constitutes a weighted object, is fixed stably to the base 30. The holding state of the ear-shaped unit 50 in the measurement system 10 can thus be brought closer to the state in which a human ear is held by the temporal bone. The outer wall portion of the weight unit 54 may be adhered to the inner wall of the recess provided in the base 30.

The weight unit 54 may be formed from a metal material such as SUS or aluminum, or by a wood member or a resin member with sufficient weight. A relatively rigid material or a material with high mass is preferable to reduce the likelihood of the surface of the weight unit 54 generating a new air-conducted sound by vibrating.

The weight unit 54 preferably has a thickness of approximately 1 cm to 5 cm in the extending direction, an outer diameter of approximately 2 cm to 5 cm, a first inner diameter at the side closer to the ear model 51 of approximately 1.5 cm to 3 cm, and a second inner diameter at the side farther from the ear model 51 of approximately 0.2 cm to 2 cm. A cross-section need not have the stepped shape illustrated in the drawings and may instead have a sloped shape that gradually transitions from the first inner diameter to the second inner diameter. The weight of the weight unit 54 may, for example, be from 10 g to 1000 g. For example, when the weight unit 54 is fixed to the base 30 by being held, adhered, or the like, it suffices for the combined weight of the weight unit 54 and the base 30 to be from 300 g to 5 kg. The weight of a human head is approximately 5 kg for a person weighing 50 kg. Therefore, setting the combined weight of the weight unit 54 and the base 30 to be between approximately 300 g and 5 kg can reduce the effect of a vibration mode not found in an actual head.

As illustrated in FIG. 1 and FIG. 3, the vibration detection element 61 of the vibration detector 60 is disposed on the surface of the ear-shaped unit 50 opposite the ear model 51, on the outside of the artificial external ear canal unit 52 in an inner cavity of the weight unit 54 in plan view. The vibration detection element 61 detects the amount of vibration transmitted through soft tissue, mainly the ear model 51 and the artificial external ear canal unit 52, when the vibrating panel 103 is placed against the ear-shaped unit 50. In other words, the vibration detection element 61 detects the vibration component that is heard without passing through the eardrum due to vibration of the panel 103 directly shaking the inner ear.

The vibration detection element 61 is, for example, configured as a vibration detection element that has flat output characteristics in the frequency range targeted for measurement by the acoustic device 100 (for example, from 0.1 kHz to 30 kHz), is lightweight, and can accurately measure even slight vibrations. An example of such a vibration detection element is a piezoelectric acceleration pickup or other such vibration pickup, such as the vibration pickup PV-08A produced by Rion Corporation or the like.

Furthermore, as illustrated in FIG. 1 and FIG. 3, a sound pressure measuring unit 70 is disposed in the ear-shaped unit 50. The sound pressure measuring unit 70 measures the sound pressure of sound propagating through the artificial external ear canal 53. When the panel 103 is placed against a human ear, the sound pressure measuring unit 70 measures both sound pressure corresponding to an air-conducted component heard directly through the eardrum by vibration of air due to vibration of the panel 103 and sound pressure corresponding to a second air-conducted component, heard through the eardrum, of sound produced in the ear itself by the inside of the external ear canal vibrating due to vibration of the panel 103.

The sound pressure measuring unit 70 includes a microphone 71 held by a tube member 72 that extends from the outer wall (peripheral wall of the hole) of the artificial external ear canal 53. The microphone 71 is, for example, configured as a measurement capacitor microphone that has a low self-noise level and that has flat output characteristics in the frequency range targeted for measurement by the acoustic device 100. The capacitor microphone UC-53A produced by Rion Corporation may, for example, be used as the microphone 71. The microphone 71 is disposed so that the sound pressure detection face nearly matches the end face of the artificial external ear canal unit 52. In other words, the microphone 71 is disposed to be at the same position as a human eardrum.

Next, a holder 80 is described. It suffices for the holder 80 to press the acoustic device 100 against the ear model 51 of the measurement apparatus stably at a constant pressure. The pressing force and contact position of the acoustic device against the ear differ for each person (user) and also vary during use. In this embodiment, the acoustic device 100 is preferably held at various angles and pressing forces to imitate such modes of use of the acoustic device 100.

To this end, the holder 80 is provided with a support 81 that supports the acoustic device 100. In FIG. 1, the holder 80 includes two supports 81. One of the two supports 81 is attached to one end of an arm 82. The other support 81 is attached at roughly the central portion of the arm 82 between the one end and the other end. Each support 81 is attached to the arm 82 to allow rotational adjustment about a shaft. The other end of the arm 82 is attached to a movement adjuster 83 to allow rotational adjustment. The movement adjuster 83 is attached to the base 30 to allow translation and rotational adjustment relative to the base 30. The shaft rotatably supporting each part can repeatedly fasten and loosen via a screw member or the like, thereby obtaining a predetermined holding force.

As a result, the pressing force on the ear-shaped unit 50 by the vibrating body (panel 103) is adjusted for the acoustic device 100 supported by the supports 81. In this embodiment, the pressing force is adjusted in a range of 0 N to 10 N.

The reason for the range from 0 N to 10 N is to allow measurement over a range that is sufficiently wider than the pressing force that is envisioned when a human presses the electronic device against an ear to use the electronic device. An example of the pressing force being 0 N is when the acoustic device 100 is in contact with, but does not press against, the ear-shaped unit 50. Another example of the pressing force being 0 N is when the ear-shaped unit 50 and the acoustic device 100 are separated. In this case, for example the acoustic device 100 may be held away from the ear-shaped unit 50 in increments of 1 cm to allow measurement at each distance. This approach also allows measurement of the degree of damping of air-conducted sound due to distance using the microphone 71, thus making the measurement system more convenient. In other words, it suffices to be able to measure the vibration sound and air-conducted sound at the pressing force normally applied to a user's ear for an acoustic device containing a conventional speaker (earphone). The vibrating body is not limited to covering a portion of the ear. The vibrating body may widely cover the entire ear-shaped unit 50. Furthermore, the acoustic device may have a protrusion or corner that transmits vibration to only a portion of the tragus, for example.

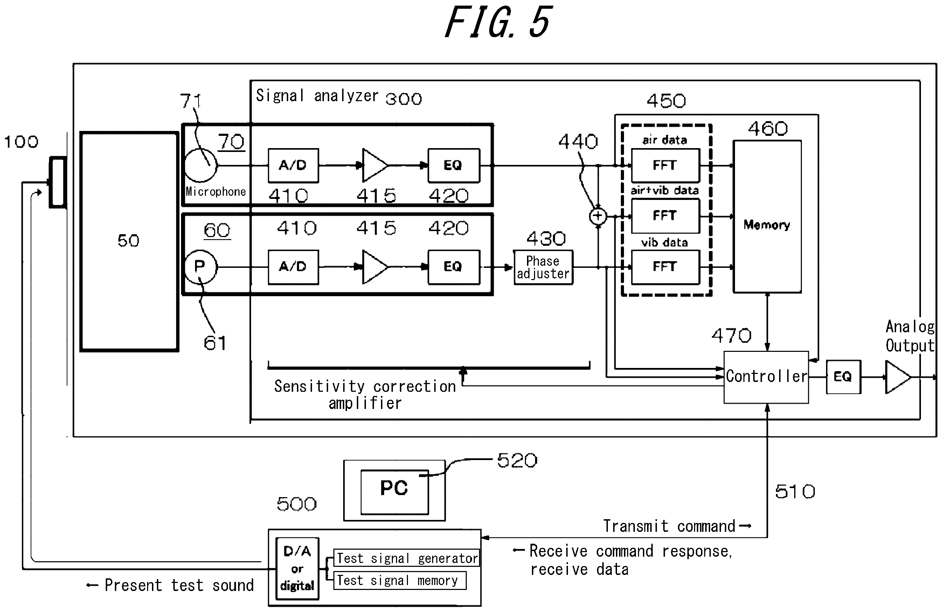

Next, the configuration of a signal analyzer 300 is described. The configuration of the signal analyzer 300 and related components are conceptually illustrated by the functional block diagram in FIG. 5. In the present embodiment, the amount of vibration and air-conducted sound transmitted through the ear-shaped unit 50 by vibration of the acoustic device 100 targeted for measurement (the air-conducted sound newly generated by the artificial external ear canal unit 52 due to vibration transmission, or the regular air-conducted sound that is generated at the panel surface of the acoustic device 100 and propagates through the air) are measured. In other words, the sensory sound pressure yielded by combining two components, i.e. a quasi-vibration component passing through soft tissue and an air-conducted component, is measured. The signal analyzer 300 mainly includes A/D converters 410, sensitivity adjusters 415, frequency characteristic adjusters 420, a phase adjuster 430 capable of adjusting the phase of the above-described vibration component relative to the air-conducted component, an output combiner 440 that combines the phase-adjusted vibration component and the air-conducted component to obtain the sensory sound pressure for a human, an analyzer 450, a memory 460, and a controller 470. The measurement system of the present disclosure may include a personal computer (PC) 500 (a display 520 and a central processing unit (CPU)), a printer, and the like.

The A/D converters 410, sensitivity adjusters 415, and frequency characteristic adjusters 420 are provided for each of the vibration detection element 61 and the microphone 71. The analog signals output by the vibration detection element 61 and the microphone 71 are input into the respective A/D converters 410. The A/D converters 410 each include an A/D conversion circuit that converts an analog signal to a digital signal. The A/D conversion circuit in each A/D converter 410 is, for example, 16 bits or more and can support 96 dB or more by dynamic range conversion. The A/D conversion circuit may also be configured so that the dynamic range is changeable.

The signals subjected to A/D conversion by the A/D converters 410 are supplied to the respective sensitivity adjusters 415. The sensitivity adjusters 415 independently adjust the amplitude of the signal subjected to A/D conversion by the respective A/D converters 410 to a required amplitude either manually or automatically. Errors in the sensitivity of the vibration detection element 61 and the sensitivity of the microphone 71 are thus corrected. Variable gain amplifier circuits (sensitivity correction amplifiers) constituting the sensitivity adjusters 415 are configured to allow adjustment of the amplitude of the A/D converted signals over a range of, for example, ±20 dB. The order in which the A/D converters 410 and the sensitivity adjusters 415 are disposed may be reversed.

The output of the sensitivity adjusters 415 is provided to the respective frequency characteristic adjusters 420. The frequency characteristic adjuster 420 corresponding to the vibration detection element 61 includes an equalizer (EQ) that adjusts the frequency characteristics of the detection signal from the vibration detection element 61. The frequency characteristic adjuster 420 corresponding to the microphone 71 includes an equalizer (EQ) that adjusts the frequency characteristics of the detection signal from the microphone 71. The frequency characteristic adjusters 420 independently adjust the frequency characteristics of the input signals to frequency characteristics near the auditory sensation of the human body either manually or automatically. The equalizers may, for example, be configured with a graphical equalizer having a plurality of bands, a low pass filter, a high pass filter, or the like.

Among the output of the frequency characteristic adjusters 420, output related to the vibration component (output of the frequency characteristic adjuster 420 corresponding to the vibration detection element 61) is provided to the phase adjuster 430. The phase adjuster 430 includes a variable delay circuit that adjusts the phase of the detection signal from the vibration detection element 61. As a result, the difference in the speed of sound propagating through the artificial external ear canal unit 52 relative to the speed of sound propagating by air through the artificial external ear canal can be subjected to phase adjustment to approach the actual difference.

It is assumed that the phase relationship between the output of the vibration detection element 61 and the output of the microphone 71 will be shifted greatly from that of a human ear, particularly at high frequencies. If the phase relationship between the output of the vibration detection element 61 and the output of the microphone 71 shifts greatly, then upon combining the two outputs with the below-described output combiner 440, amplitude peaks and dips may appear at different values than in actuality, and the combined output may be amplified or diminished.

Therefore, in the present embodiment, in accordance with the measurement frequency range of the acoustic device 100 targeted for measurement, the phase of the detection signal from the vibration detection element 61 is adjusted over a predetermined range by the variable delay circuit. For example, in the case of the measurement frequency range of the acoustic device 100 being from 100 Hz to 10 kHz, the phase of the detection signal from the vibration detection element 61 is adjusted by the variable delay circuit over a range of approximately ±10 ms (corresponding to ±100 Hz) at least in increments smaller than 0.1 ms (corresponding to 10 kHz). In the case of a human ear as well, phase misalignment occurs between the vibration component and the air-conducted component. Therefore, phase adjustment by the variable delay circuit does not refer to matching the phase of the detection signals from the vibration detection element 61 and the microphone 71, but rather to matching the phase of these detection signals to the actual auditory sensation by the ear.

Output of the phase adjuster 430 is provided to the output combiner 440. The output combiner 440 obtains a combined component by combining the detection signal, the phase of which is adjusted by the variable delay circuit, from the vibration detection element 61 with the detection signal that passes from the microphone 71 through the frequency characteristic adjuster 420. This enables acquisition of sensory sound pressure approximating that of a human body, where the sensory sound pressure is a combination of the amount of vibration and the sound pressure transmitted by vibration of the acoustic device 100 targeted for measurement, i.e. a combination of vibration transmission through soft tissue and air-conducted sound.

The combined output of the output combiner 440 is input into the analyzer 450. The analyzer 450 includes three fast Fourier transform (FFT) units that perform frequency analysis on the output from the output combiner 440. The analyzer 450 performs FFT processing on three types of component: the air-conducted component alone, the vibration component alone, and the combined component obtained by combining the air-conducted component and the vibration component. As a result, power spectrum data (air data, vib data, air+vib data) corresponding to the vibration component (vib) alone, the air-conducted component (air) alone, and the combined component obtained by combining the air-conducted component and the vibration component are obtained from the respective FFT units.

In each FFT unit, analysis points are set for the frequency component (power spectrum) in correspondence with the measurement frequency range of the acoustic device 100. For example, when the measurement frequency range of the acoustic device 100 is 100 Hz to 10 kHz, analysis points are set so as to analyze the frequency component at each point when dividing the interval in a logarithmic graph of the measurement frequency range into 100 to 200 equal portions.

The output of each FFT unit is stored in the memory 460. The memory 460 preferably has the capacity of at least a triple buffer that can store the analysis data sets (power spectrum data) from the FFT units. The memory 460 can be configured always to allow transmission of the latest data upon a data transmission request from the below-described PC 500.

The controller 470 is connected to the PC 500 by a connection cable 510 for an interface such as universal serial bus (USB), recommended standard 232 (RS-232C), small computer system interface (SCSI), PC card, or the like, or by a wireless connection such as Wi-Fi or Bluetooth (BT). On the basis of commands from the PC 500, the controller 470 controls operations of each component of the signal analyzer 300. The signal analyzer 300 may be configured as software executed on any suitable processor, such as a CPU, or may be configured by a digital signal processor (DSP).

The PC 500 includes a test signal memory, a test signal generator, a conversion circuit, and the like. The test signal memory stores test signal data, which is test data that the acoustic device 100 targeted for measurement is caused to present. On the basis of the test signal data stored in the test signal memory, the test signal generator generates a test signal indicating a test sound that the acoustic device 100 targeted for measurement is caused to present. The conversion circuit subjects the test signal generated by the test signal generator to D/A conversion or digital conversion and outputs the result to the acoustic device 100. Operations of such a PC 500 are implemented by an application to evaluate the acoustic device 100 with the measurement system 10. The evaluation application includes test signal data and is, for example, copied from a compact disc read-only memory (CD-ROM) or downloaded over a network or the like. A pure tone signal, a multi-sine signal, and a pure tone sweep signal are included in the test signal data.

The PC 500 displays an application screen based on the evaluation application on a display 520, for example. On the basis of information input via the application screen, the PC 500 transmits commands to the signal analyzer 300. The PC 500 also receives command acknowledgments and data from the controller 470, and in accordance with the received data, executes predetermined processing and displays the measurement results on the application screen. As necessary, the PC 500 may also output the measurement results to the printer to print the measurement results.

The controller 470 can, for example, be mounted on the base 30 and be connected by a connection cable or the like to the analyzer 450, the PC 500, and the printer installed at a location separate from the base 30.

### (Second embodiment)

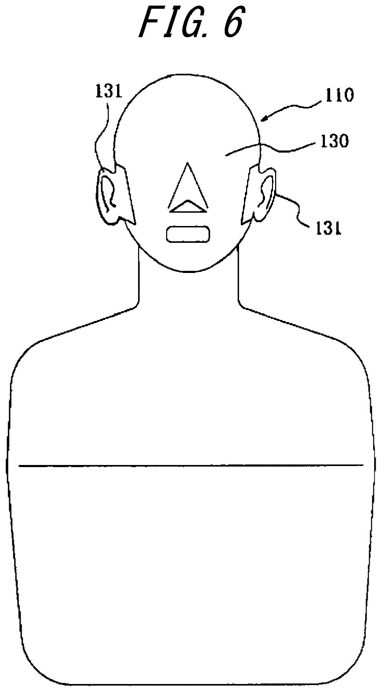

FIG. 6 illustrates the configuration structure of the main portion of a measurement system 110 according to the second embodiment of the present disclosure. The second embodiment further includes a human head model 130 to which the ear-shaped unit 50 of the first embodiment can be attached. Otherwise, the second embodiment may be the same as the first embodiment. The head model 130 is, for example, HATS, KEMAR®, or the like. Artificial ears 131 (the same as the ear-shaped unit 50) of the head model 130 are detachable from the head model 130.

The measurement system 110 of the present embodiment yields results similar to those of the measurement system 10 of the first embodiment. In particular, the present embodiment includes the human head model 130, thereby allowing evaluation that conforms more closely to the actual mode of use by taking into consideration the effect of the head. The holder that holds the acoustic device or electronic device may be the same as in the first embodiment (see FIG. 1).

The present disclosure is not limited to the above embodiments, and a variety of modifications and changes are possible. For example, the acoustic device 100 targeted for measurement in the above embodiments includes the panel 103, and the panel 103 is assumed to vibrate as a vibrating object. However, this configuration is not limiting. For example, it is possible similarly to evaluate an electronic device that is a flip phone with a vibrating panel that is contacted to an ear in a mode of use such as a phone call. The target of measurement is not limited to a mobile phone, and various other bone-conduction earphones can be evaluated.

In the above embodiments, the phase of the detection signal from the vibration detection element 61 is delayed in the phase adjuster 430 with respect to the phase of the detection signal from the microphone 71. However, this configuration is not limiting. For example, a buffer that is first in, first out (FIFO) or the like may be used to advance the phase of the detection signal from the microphone 71 with respect to the phase of the detection signal from the vibration detection element 61.

In the above embodiments, the controller 470 and the PC 500 are provided separately, but the functions of the evaluation application executed by the PC 500 may be provided in the controller 470, with the PC 500 being omitted.

It suffices for the sensitivity adjusters 415, A/D converters 410, frequency characteristic adjusters 420, phase adjuster 430, output combiner 440, analyzer 450, memory 460, controller 470, display 520, printer, and the like in the above-described embodiments to be capable of transmitting or receiving signals to and from each other by wired or wireless communication. Furthermore, the measurement system of the present disclosure is not limited to a stand-alone measurement apparatus consolidating all of the functions. Rather, a configuration utilizing a network system or the cloud may be adopted, such as the case of distributing the sensitivity adjusters 415, the analyzer 450, the memory 460, and the like over one or a plurality of PCs or external servers.

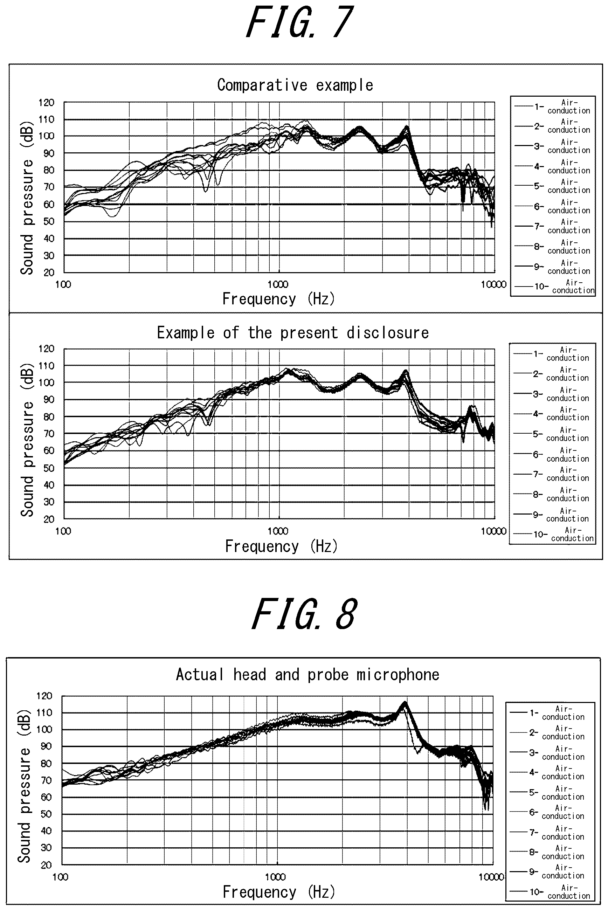

Next, with reference to FIGS. 7 and 8, measurement results for an example of the present disclosure, a comparative example, and an actual head are described. These measurement results are for an example provided with a weight unit, a comparative example in which the measurement system is not provided with a weight unit, and an actual head for which measurement was made with a probe microphone inside the external ear canal of an actual human (however, the probe microphone was somewhat further outside than the position of the eardrum, and the vibrating body had to be placed against the tragus across from the probe microphone; therefore, the measurement results for the actual head are no more than a reference value for illustrating the trend in variation). In all cases, the same bone-conduction receiver B71 was used as the vibrating body.

Here, tests were performed to simulate ten types of modes of use by changing the pressing force and angle of contact of the vibrating body on the ear model and the actual head (tragus). The air-conducted sound (including the air-conducted sound newly generated in the artificial external ear canal) was measured in each of the ten modes of use of the vibrating body for the comparative example, the example, and the head. The results showed that variation over the frequency band as a whole increased in the order of the actual head, the example, and the comparative example. In the comparative example, the variation was predominant around 180 Hz and 500 Hz. Hence, the example clearly allows measurement more closely approximating an actual head than does the comparative example.

### REFERENCE SIGNS LIST

- 10: Measurement system
- 30: Base
- 50: Ear-shaped unit
- 51: Ear model
- 52: Artificial external ear canal unit
- 53: Artificial external ear canal
- 54: Weight unit
- 60: Vibration detector
- 61: Vibration detection element
- 70: Sound pressure measuring unit
- 71: Microphone
- 72: Tube member
- 80: Holder
- 81: Support
- 82: Arm
- 83: Movement adjuster
- 100: Electronic device
- 101: Housing
- 102: Piezoelectric element
- 103: Panel (vibrating body)
- 110: Measurement system
- 130: Head model
- 131: Artificial ear
- 300: Signal analyzer
- 410: A/D converter
- 415: Sensitivity adjuster
- 420: Frequency characteristic adjuster
- 430: Phase adjuster
- 440: Output combiner
- 450: Analyzer
- 460: Memory
- 470: Controller
- 500: PC
- 520: Display

## Claims

1. A measurement system (10) for evaluating an electronic device (100) that transmits, to a user, sound based on vibration of a vibrating body that is pressed against a human ear, the measurement system comprising:
an ear-shaped unit (50) comprising an ear model (51) imitating a human ear, an artificial external ear canal unit (52) forming an artificial external ear canal (53) that extends from the ear model (51), and a weight unit (54) configured to house the artificial external ear canal unit (52) therein without contacting the artificial external ear canal unit (52);
a sound pressure measuring unit (70) disposed at an end of the artificial external ear canal unit (52) and configured to detect air-conducted sound including sound generated by the artificial external ear canal unit (52) and
a base (30) having a recess or a through-hole, **characterized in that**
the weight unit (54) is disposed inside the recess or the through-hole and is held by the base (30).

2. The measurement system (10) of claim 1, wherein the weight unit (54) is adhered to the ear model (51).

3. The measurement system (10) of claim 1, wherein the weight unit (54) is in contact with the ear model (51) at least at a time of measurement.

4. The measurement system (10) of any one of claims 1 to 3, further comprising a vibration detector (60) disposed in a space between an inner wall of the weight unit (54) and an outer wall of the artificial external ear canal unit (52) and configured to detect and output vibration transmitted to the ear model (51).

5. The measurement system (10) of claim 4, further comprising an output combiner (440) configured to combine output of the sound pressure measuring unit (70) and output of the vibration detector (60).

6. The measurement system (10) of any one of claims 1 to 5, further comprising an analyzer (450) configured to analyze a frequency characteristic of output of the sound pressure measuring unit (70).

7. The measurement system (10) of claim 5, further comprising an analyzer (450) configured to analyze a frequency characteristic of the combined output.

8. The measurement system (10) of any one of claims 4, 5, or 7, further comprising a sensitivity adjuster (415) configured to adjust a sensitivity of the vibration detector (60).

9. The measurement system (10) of any one of claims 1 to 8, further comprising a sensitivity adjuster (415) configured to adjust a sensitivity of the sound pressure measuring unit (70).

10. The measurement system (10) of any one of claims 1 to 9, further comprising a display (520) configured to display a detection result.

11. The measurement system (10) of any one of claims 1 to 10, further comprising a human head model (130), wherein the ear-shaped unit (50) is an artificial ear forming part of the head model (130) and is detachable from the head model (130).

12. The measurement system (10) of any one of claims 1 to 11, wherein the weight unit (54) weighs between 10 g and 1000 g.

13. The measurement system (10) of any one of claims 1 to 12, further comprising a holder (80) configured to hold the electronic device (100).

14. The measurement system (10) of claim 13, wherein the holder (80) is configured to adjust a pressing force of the vibrating body on the ear-shaped unit (50) in a range from 0 N to 10 N.

15. The measurement system (10) of any one of claims 1 to 14, wherein the sound pressure measuring unit (70) comprises a microphone (71) held by a tube member (72) extending from an outer wall of the artificial external ear canal (53).

16. A measurement method for evaluating an electronic device (100) that transmits sound to a user based on vibration of a vibrating body that is pressed against a human ear, the measurement method comprising:
placing the electronic device (100) in contact with an ear model (51) imitating a human ear in an ear-shaped unit (50) being part of a measurement system (10), wherein the ear-shaped unit (50) comprises the ear model (51), an artificial external ear canal unit (52) forming an artificial external ear canal (53) that extends from the ear model (51), and a weight unit (54) configured to house the artificial external ear canal unit (52) therein without contacting the artificial external ear canal unit (52) and the measurement system further comprises a base (30) having a recess or a through-hole, wherein the weight unit (54) is disposed inside the recess or the through-hole and is held by the base (30); and
detecting air-conducted sound including sound generated by the artificial external ear canal unit (52) with a sound pressure measuring unit (70) disposed at an end of the artificial external ear canal unit (52).

17. The measurement method of claim 16, further comprising:
providing a vibration detector (60) disposed in a space between an inner wall of the weight unit (54) and an outer wall of the artificial external ear canal unit (52) and configured to detect and output vibration transmitted to the ear model (51); and
detecting vibration transmitted to the ear model (51).

## Patentansprüche

1. Messsystem (10) zum Evaluieren eines elektronischen Geräts (100), das basierend auf der Vibration eines vibrierenden Körpers, der gegen ein menschliches Ohr gedrückt wird, Schall auf einen Benutzer überträgt, wobei das Messsystem umfasst:
eine ohrförmige Einheit (50) mit einem Ohrmodell (51), das ein menschliches Ohr imitiert, einer künstlichen äußeren Gehörgangeinheit (52), die einen künstlichen äußeren Gehörgang (53) bildet, der sich vom Ohrmodell (51) weg erstreckt, und einer Gewichtseinheit (54), die konfiguriert ist, um die künstliche äußere Gehörgangeinheit (52) darin aufzunehmen, ohne die künstliche äußere Gehörgangeinheit (52) zu berühren;
eine Schalldruckpegel-Messeinheit (70), die an einem Ende der künstlichen äußeren Gehörgangeinheit (52) angeordnet und konfiguriert ist, um luftgeleiteten Schall, einschließlich des von der künstlichen äußeren Gehörgangeinheit (52) erzeugten Schalls, zu erfassen; und
eine Basis (30) mit einer Aussparung oder einem Durchgangsloch, **dadurch gekennzeichnet, dass**
die Gewichtseinheit (54) in der Aussparung oder im Durchgangsloch angeordnet ist und von der Basis (30) gehalten wird.

2. Messsystem (10) nach Anspruch 1, bei dem die Gewichtseinheit (54) an dem Ohrmodell (51) angebracht ist.

3. Messsystem (10) nach Anspruch 1, bei dem die Gewichtseinheit (54) zumindest zu einem Zeitpunkt der Messung mit dem Ohrmodell (51) in Kontakt steht.

4. Messsystem (10) nach einem der Ansprüche 1 bis 3, das ferner einen Vibrationsdetektor (60) umfasst, der in einem Raum zwischen einer Innenwand der Gewichtseinheit (54) und einer Außenwand der künstlichen äußeren Gehörgangeinheit (52) angeordnet ist, und zum Erfassen und Ausgeben von Vibrationen konfiguriert ist, die auf das Ohrmodell (51) übertragen werden.

5. Messsystem (10) nach Anspruch 4, das ferner einen Ausgangskombinator (440) umfasst, der konfiguriert ist, um die Ausgabe der Schalldruckpegel-Messeinheit (70) und die Ausgabe des Vibrationsdetektors (60) zu kombinieren.

6. Messsystem (10) nach einem der Ansprüche 1 bis 5, das ferner einen Analysator (450) umfasst, der konfiguriert ist, um eine Frequenzcharakteristik der Ausgabe der Schalldruckpegel-Messeinheit (70) zu analysieren.

7. Messsystem (10) nach Anspruch 5, das ferner einen Analysator (450) umfasst, der konfiguriert ist, um eine Frequenzcharakteristik des kombinierten Ausgangs zu analysieren.

8. Messsystem (10) nach einem der Ansprüche 4, 5 oder 7, das ferner eine Empfindlichkeits-Einstelleinrichtung (415) umfasst, die konfiguriert ist, um eine Empfindlichkeit des Vibrationsdetektors (60) einzustellen.

9. Messsystem (10) nach einem der Ansprüche 1 bis 8, das ferner eine Empfindlichkeits-Einstelleinrichtung (415) umfasst, die konfiguriert ist, um eine Empfindlichkeit der Schalldruckpegel-Messeinheit (70) einzustellen.

10. Messsystem (10) nach einem der Ansprüche 1 bis 9, das ferner eine Anzeige (520) umfasst, die konfiguriert ist, um ein Erfassungsergebnis anzuzeigen.

11. Messsystem (10) nach einem der Ansprüche 1 bis 10, das ferner ein menschliches Kopfmodell (130) umfasst, wobei die ohrförmige Einheit (50) ein künstliches Ohr ist, das einen Teil des Kopfmodells (130) bildet und vom Kopfmodell (130) abnehmbar ist.

12. Messsystem (10) nach einem der Ansprüche 1 bis 11, bei dem die Gewichtseinheit (54) zwischen 10 g und 1000 g wiegt.

13. Messsystem (10) nach einem der Ansprüche 1 bis 12, das ferner einen Halter (80) umfasst, der konfiguriert ist, um das elektronische Gerät (100) zu halten.

14. Messsystem (10) nach Anspruch 13, bei dem der Halter (80) konfiguriert ist, um eine Druckkraft des vibrierenden Körpers auf die ohrförmige Einheit (50) in einem Bereich von 0 N bis 10 N einzustellen.

15. Messsystem (10) nach einem der Ansprüche 1 bis 14, bei dem die Schalldruckpegel-Messeinheit (70) ein Mikrofon (71) umfasst, das von einem Rohrelement (72) gehalten wird, das sich von einer Außenwand des künstlichen äußeren Gehörgangs (53) weg erstreckt.

16. Messverfahren zum Evaluieren eines elektronischen Geräts (100), das basierend auf der Vibration eines vibrierenden Körpers, der gegen ein menschliches Ohr gedrückt wird, Schall auf einen Benutzer überträgt, wobei das Messverfahren umfasst:
Platzieren des elektronischen Geräts (100) in Kontakt mit einem Ohrmodell (51), das ein menschliches Ohr in einer ohrförmigen Einheit (50) imitiert, die Teil eines Messsystems (10) ist, wobei die ohrförmige Einheit (50) das Ohrmodell (51), eine künstliche äußere Gehörgangeinheit (52), die einen künstlichen äußeren Gehörgangs (53) bildet, der sich vom Ohrmodell (51) weg erstreckt, und eine Gewichtseinheit (54) umfasst, die konfiguriert ist, um die künstliche äußere Gehörgangeinheit (52) darin aufzunehmen, ohne die künstliche äußere Gehörgangeinheit (52) zu berühren, und das Messsystem ferner eine Basis (30) mit einer Aussparung oder einem Durchgangsloch umfasst, wobei die Gewichtseinheit (54) innerhalb der Aussparung oder des Durchgangslochs angeordnet ist und von der Basis (30) gehalten wird; und
Erfassen von luftgeleitetem Schall, einschließlich Schall, der von der künstlichen äußeren Gehörgangeinheit (52) erzeugt wird, mit einer Schalldruckpegel-Messeinheit (70), die an einem Ende der künstlichen äußeren Gehörgangeinheit (52) angeordnet ist.

17. Messverfahren nach Anspruch 16, das ferner umfasst:
Bereitstellen eines Vibrationsdetektors (60), der in einem Raum zwischen einer Innenwand der Gewichtseinheit (54) und einer Außenwand der künstlichen äußeren Gehörgangeinheit (52) angeordnet und konfiguriert ist, um die auf das Ohrmodell (51) übertragene Vibration zu erfassen und auszugeben; und
Erfassen von Vibrationen, die auf das Ohrmodell (51) übertragen werden.

## Revendications

1. Système de mesure (10) destiné à évaluer un dispositif électronique (100) qui transmet, à un utilisateur, un son en fonction d'une vibration d'un corps vibrant qui est comprimé contre une oreille humaine, le système de mesure comprenant :
une unité en forme d'oreille (50) comprenant un modèle d'oreille (51) imitant une oreille humaine, une unité de conduit auriculaire externe artificiel (52) formant un conduit auriculaire externe artificiel (53) qui s'étend depuis le modèle auriculaire (51), et une unité pondérale (54) conçue pour loger l'unité de conduit auriculaire externe artificiel (52) à l'intérieur de celle-là sans entrer en contact avec l'unité de conduit auriculaire externe artificiel (52) ;
une unité de mesure de niveau de pression acoustique (70) disposée à une extrémité de l'unité de conduit auriculaire externe artificiel (52) et conçue pour détecter un son transmis par l'air comprenant un son généré par l'unité de conduit auriculaire externe artificiel (52) et
un socle (30) présentant un évidement ou un trou traversant, **caractérisé en ce que**
l'unité pondérale (54) est disposée à l'intérieur de l'évidement ou du trou traversant et est maintenue par le socle (30).

2. Système de mesure (10) selon la revendication 1, dans lequel l'unité pondérale (54) est collée au modèle auriculaire (51).

3. Système de mesure (10) selon la revendication 1, dans lequel l'unité pondérale (54) est en contact avec le modèle auriculaire (51) au moins à un moment de mesure.

4. Système de mesure (10) selon l'une quelconque des revendications 1 à 3, comprenant en outre un détecteur de vibration (60) disposé dans un espace entre une paroi interne de l'unité pondérale (54) et une paroi externe de l'unité de conduit auriculaire externe artificiel (52) et conçu pour détecter et émettre une vibration transmise au modèle auriculaire (51).

5. Système de mesure (10) selon la revendication 4, comprenant en outre un multiplexeur de sortie (440) conçu pour combiner une sortie de l'unité de mesure de niveau de pression acoustique (70) et une sortie du détecteur de vibration (60).

6. Système de mesure (10) selon l'une quelconque des revendications 1 à 5, comprenant en outre un analyseur (450) conçu pour analyser une caractéristique de fréquence de sortie de l'unité de mesure de niveau de pression acoustique (70).

7. Système de mesure (10) selon la revendication 5, comprenant en outre un analyseur (450) conçu pour analyser une caractéristique de fréquence de la sortie combinée.

8. Système de mesure (10) selon l'une quelconque des revendications 4, 5 ou 7, comprenant en outre un ajusteur de sensibilité (415) conçu pour ajuster une sensibilité du détecteur de vibration (60).

9. Système de mesure (10) selon l'une quelconque des revendications 1 à 8, comprenant en outre un ajusteur de sensibilité (415) conçu pour ajuster une sensibilité de l'unité de mesure de niveau de pression acoustique (70).

10. Système de mesure (10) selon l'une quelconque des revendications 1 à 9, comprenant en outre un affichage (520) conçu pour afficher un résultat de détection.

11. Système de mesure (10) selon l'une quelconque des revendications 1 à 10, comprenant en outre un modèle de tête humaine (130), dans lequel l'unité en forme d'oreille (50) est une oreille artificielle formant une partie du modèle de tête (130) et peut être détachée du modèle de tête (130).

12. Système de mesure (10) selon l'une quelconque des revendications 1 à 11, dans lequel l'unité pondérale (54) pèse entre 10g et 1000 g.

13. Système de mesure (10) selon l'une quelconque des revendications 1 à 12, comprenant en outre un support (80) conçu pour maintenir le dispositif électronique (100).

14. Système de mesure (10) selon la revendication 13, dans lequel le support (80) est conçu pour ajuster une force de pression du corps vibrant sur l'unité en forme d'oreille (50) dans une plage allant de 0 N à 10N.

15. Système de mesure (10) selon l'une quelconque des revendications 1 à 14, dans lequel l'unité de mesure de niveau de pression acoustique (70) comprend un microphone (71) maintenu par un élément tubulaire (72) s'étendant depuis une paroi externe du conduit auriculaire externe artificiel (53).

16. Procédé de mesure destiné à évaluer un dispositif électronique (100) qui transmet un son à un utilisateur en fonction d'une vibration d'un corps vibrant qui est comprimé contre une oreille humaine, le procédé de mesure comprenant :
le placement du dispositif électronique (100) en contact avec un modèle d'oreille (51) imitant une oreille humaine dans une unité en forme d'oreille (50) faisant partie d'un système de mesure (10), l'unité en forme d'oreille (50) comprenant le modèle d'oreille (51), une unité de conduit auriculaire externe artificiel (52) formant un conduit auriculaire externe artificiel (53) qui s'étend depuis le modèle d'oreille (51) et une unité pondérale (54) conçue pour loger l'unité de conduit auriculaire externe artificiel (52) à l'intérieur de celle-ci sans entrer en contact avec l'unité de conduit auriculaire externe artificiel (52) et le système de mesure comprenant en outre un socle (30) présentant un évidement ou un trou traversant, l'unité pondérale (54) étant disposée à l'intérieur de l'évidement ou du trou traversant et étant maintenue par le socle (30) ; et
la détection d'un son transmis par l'air comprenant un son généré par l'unité de conduit auriculaire externe artificiel (52) avec une unité de mesure de niveau de pression acoustique (70) disposée à une extrémité de l'unité de conduit auriculaire externe artificiel (52).

17. Procédé de mesure selon la revendication 16, comprenant en outre :
la fourniture d'un détecteur de vibration (60) disposé dans un espace entre une paroi interne de l'unité pondérale (54) et une paroi externe de l'unité de conduit auriculaire externe artificiel (52) et conçu pour détecter et émettre une vibration transmise au modèle d'oreille (51) ; et
la détection d'une vibration transmise au modèle d'oreille (51).
